# EUROPEAN PATENT APPLICATION

(11) **EP 2 680 125 A2**
(43) Date of publication of application: **01.01.2014**
(21) Application number: 13305874.3
(22) Date of filing: 25.06.2013
(51) Int. Cl.: G06F 3/0488, G06F 3/0486, G06F 9/44, H04L 12/00

(54) **Enhanced user interface to transfer media content**

(30) Priority: 28.06.2012 US 201261665500 P
(71) Applicant: Orange, 75015 Paris (FR)
(72) Inventor: Briand, Hyacinthe, CA 94115 SAN FRANCISCO (FR); So, Bosco, SAN FRANCISCO, CA California CA94132 (US); Vellaikal, Asha, SAN FRANCISCO, CA California CA 94025 (US); Sidhom, Gabriel, MILL VALLEY, CA California CA 94941 (US); Nahon, Georges, SAN FRANCISCO, CA California CA 94107 (US)

(57) **Abstract**

The present invention relates to a method for sharing a media content displayed in a window of the touch input interface of a first electronic device with at least one second electronic device, said first electronic device comprising a processor controlling said touch input interface, the method being carried out by said processor and comprising the acts of enabling the displacement of the window responsive to the capture of a first touch input indicative of the initiation of the transfer, capturing a continuous touch input across the interface from an initial position in the window, displacing the window with each additional touch input of the continuous touch input, sending an activation message that the media content is to be played on the second device when determining that the window is within a given distance of a virtual representation of the second electronic device on the interface..

## Description

### FIELD OF THE PRESENT SYSTEM:

The present invention generally relates to mobile devices or handsets, and more specifically to mobile devices handling touch based inputs.

### BACKGROUND OF THE PRESENT SYSTEM:

Mobile handsets have an inherently impoverished graphical user interface (GUI) with respect to desktop computers. Small screens and tiny keyboards are typical of mobile handsets that fit in your pocket. Recent so called smart phones have introduced the use of a touch screen in an attempt to simplify the user experience with his mobile handset. For instance, the touch interface of the iPhone® has revolutionized the mobile handset industry and brought whole new mobile user experiences.

In existing smart phones, application programs (AP) may be controlled using touch inputs. Different touch inputs may control the AP in different ways. For instance, a user touching an AP icon will cause a control of the desktop GUI that will launch the AP corresponding to the touched icon. The desktop GUI of the iPhone™ comprising a plurality of AP icons may be seen as an AP itself. A sliding motion across the desktop GUI, or a drag touch input, will cause another control of the desktop GUI, like displaying another set of AP icons hidden so far. The user gets a feeling that he is browsing through pages of AP icons to select an interesting application program.

The new smartphones or even pads, like the Apple™ or Samsung™ tablets, are now capable of functions far beyond simple phone services. They can include media playing and recording, web browsing, games ...

Among media applications, it is possible now to play media like videos or music with these devices. The media content can be local or streamed over a data connection from a media server.

Smart phones are just one of many devices available today to a user. Other devices like music players, TVs, computers, pads ... can also play media content. Indeed, the emergence of connected devices has extended the realm of the possible when it comes for the user to interact with and share a media content. This creates the opportunity for a variety of players (manufacturers, pay-TV operators, Internet companies, telecom operators ... ) to offer multi-screens solutions between devices.

Sharing solutions are now readily available to distribute the media content among the different user devices. A user for instance can send a picture from one smartphone to another target smartphone provided they both host the same sharing application. To do so the devices are paired and the user has the feeling that he is actually displacing the picture from one device to the other by simply sliding the picture with his finger in the direction of the receiving device.

Other solutions are available for videos played for instance on a tablet. Apple Airplay® is a solution proposed for local media content. A user may start viewing with a device like a smartphone or tablet a media content local to that device. He can then activate a popup menu listing different alternative target display devices, paired beforehand. Upon selection of one of them, the local content will be streamed through a home network from the viewing device to the selected target device.

Google Fling® offers a similar user's experience. Another solution is proposed by Snapstick™. It consists in browsing a catalog of different videos, and upon selection of one of them (an activation of a transfer), the user can shake his device and the selected video is streamed directly to another predefined device.

The existing solutions, when they allow a pre-visualization of the media content, do not offer a fluid or intuitive experience for the user. They often present cluttered interfaces to the user, especially when he is offered the possibility of sharing content with many user devices. Furthermore they do not rely extensively upon the new rich environment like a touch interface on a smart phone.

There is a need today for a new solution to share media content that really takes advantage of such a rich environment. There is a further need for an simplified interface that allows a simple and easy transfer to the user, besides the number of possible target devices.

### SUMMARY OF THE PRESENT SYSTEM:

It is an object of the present system to overcome disadvantages and/or make improvements in the prior art.

The present system relates to a method for sharing a media content from on an end point with an electronic device, the electronic device comprising a first graphical user interface (GUI) of with at least one icon representation for the end point, the icon representation comprising a graphical indication that the media content is currently available on the end point, said electronic device comprising a processor controlling said first GUI, the method being carried out by said processor and comprising:
- capturing initiation of a drag input on either one of the icon representation or the graphical indication,
- sending a transfer request for transferring the media content to the electronic device,
- rendering the transferred media content in a graphical element.

Thanks to the present method, the user can easily retrieve on a GUI of his electronic device content available on a remote end point. Though an intuitive unser input like a drag on the end point icon representation or the end point graphical indication of content, he will be able to render the distant content in a window of the GUI.

The present system also relates to an electronic device for retrieving a media content available on an end point, the electronic device comprising a first graphical user interface (GUI) of with at least one icon representation for the end point, the icon representation comprising a graphical indication that the media content is currently available on the end point, said electronic device comprising a processor controlling said first GUI, the processor being arranged to:
- capture initiation of a drag input on either one of the icon representation or the graphical indication,
- send a transfer request for transferring the media content to the electronic device,
- rendering the transferred media content in a graphical element.

The present system also relates to program product stored on a non-transitory computer-readable storage medium, and executable by an electronic device in the form of a software agent including at least one software module setup to implement the method for sharing content available on an end point with the electronic device as in the present system.

### BRIEF DESCRIPTION OF THE DRAWINGS:

The invention is explained in further detail, and by way of example, with reference to the accompanying drawings wherein:
FIG. 1 shows a mobile device in accordance with an embodiment of the present system;
FIG. 2A shows an illustration of a first embodiment of the present system;
FIG. 2B shows an illustration of a second embodiment of the present system;
FIG. 2C shows an illustration of a third embodiment of the present system;
FIG. 3, shows an exemplary flowchart in accordance with an embodiment of the present system; and,
FIGs. 4A-4G show exemplary illustrations of the GUI according to an additional embodiment of the present method.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. An operative coupling may also include a wired and/or wireless coupling to enable communication between a media content platform and one or more user devices in accordance with an embodiment of the present system. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user. The term rendering may also comprise all the actions required to generate a GUI prior to the display, like e.g. a map representation generated on a server side for a browser application on a user device.

The system, device(s), method, user interface, etc., described herein address problems in prior art systems. The man skilled in the art may easily apply the present teachings to any electronic device presenting a touch sensitive panel, (referred also hereafter as a touch sensitive display or screen), a pointing device (like a mouse) or a keyboard.

In accordance with an embodiment of the present system, an electronic device provides a GUI for controlling an application program (AP) through user inputs, such e.g. as touch or mouse inputs. In the description hereafter, reference will be made to a mobile device or handsets.

A graphical user interface (GUI) may be provided in accordance with an embodiment of the present system:
- by an application program running locally on a device processor, such as part of a computer system of a mobile device, and/or,
- as provided by a network connected device or web based server, such as a media content server providing media content to the user device, the GUI being rendered on user device through a local application program (e.g. a browser) connected to media content server.

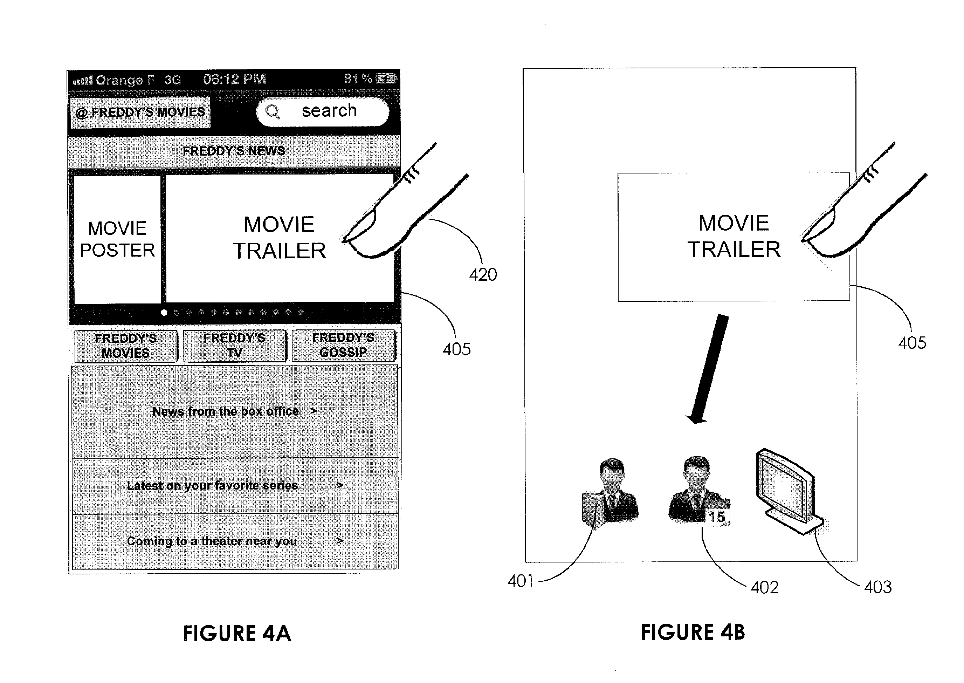

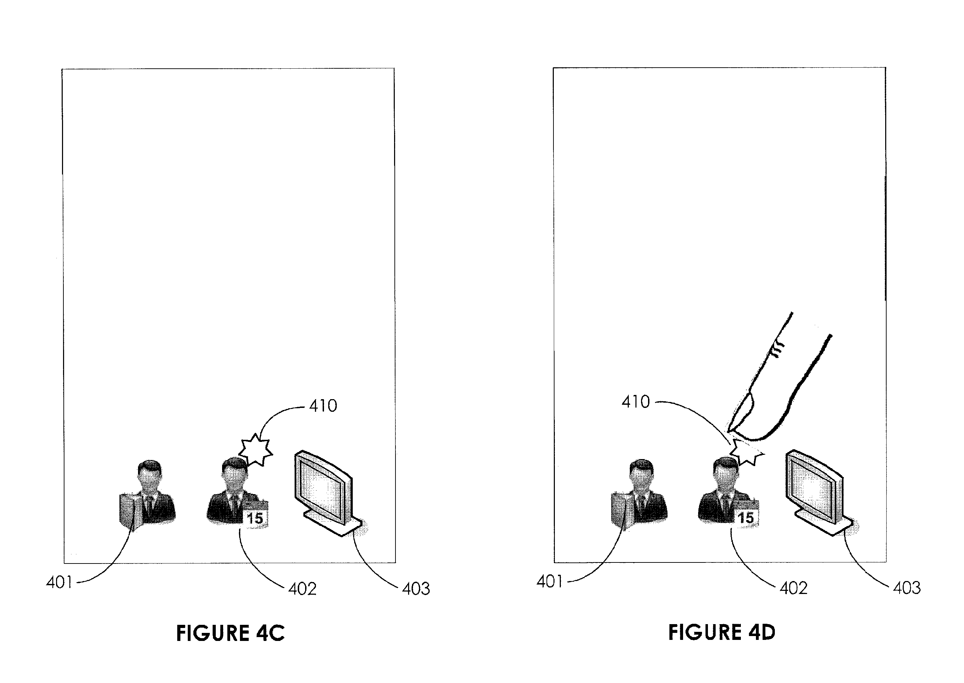

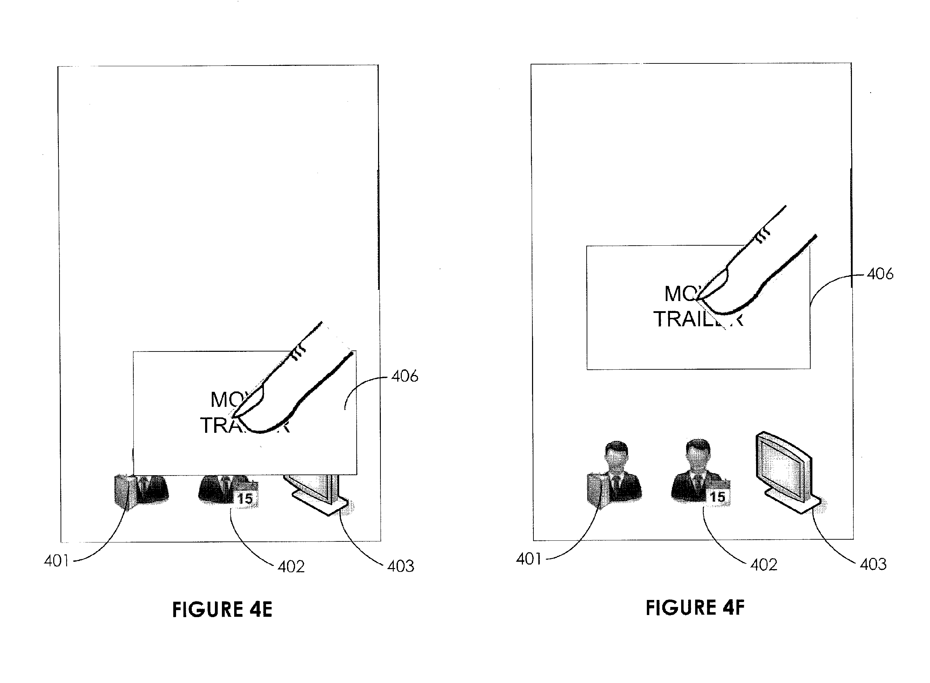

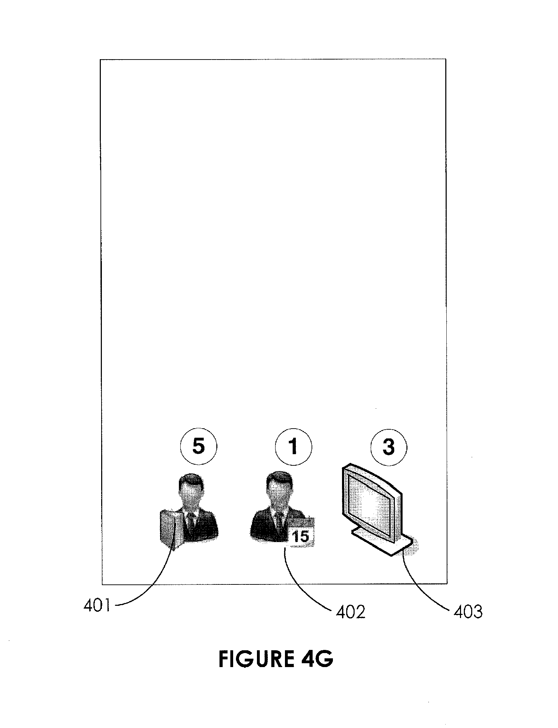

For instance, the present GUI enabling a swoop transfer (as explained later on) of a displayed media content may be generated locally by a swoop application or rendered by a local AP connected to a server providing the GUI elements. The provided visual environment may be displayed by the processor on a display device of the user device, e.g. a touch sensitive panel (touch panel in short), which a user may use to provide a number of touch inputs of different types. Furthermore, the GUIs of the embodiment illustrated in FIGs. 4 mais be generated and rendered by a local AP or genered remotely on a network connected server and rendered on a browser AP.

A GUI is a type of user interface which allows a user to interact with electronic devices such as computers, hand-held devices such as smartphones ot tablets, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, a virtual representation or an icon that launches a particular application program. By way of another example, the GUI may present a typical user interface including a windowing environment and as such, may include menu items, pull-down menu items, icons, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system (OS).

In the description here after, an application program (AP) - or software - may be seen as any tool that functions and is operated by means of a computer, with the purpose of performing one or more functions or tasks for a user or another application program. To interact with and control an AP, a GUI of the AP may be displayed on the user device display.

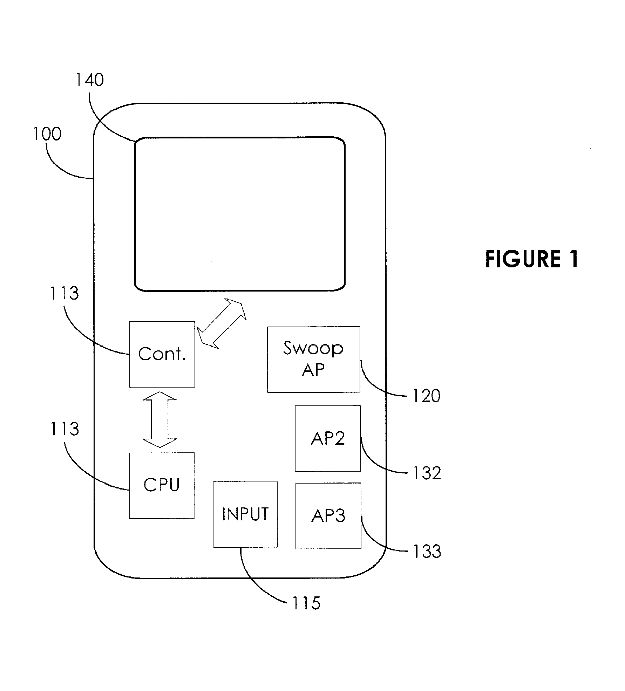

FIG. 1 is an illustration of an exemplary user device 100 used in the present system. In the here after description, the user or electronic device will illustrated as a mobile device 100 with a touch interface. This illustration is in no way limiting as the present teaching would work for any user devices such as laptops, pads, desktops and the likes, enabling the user to interact through a touch interface, a poiting device and/or a keyboard. The mobile device 100 comprises a display device 140, a processor 110, a controller 113 of the display device, and an input device 115.

In the present system, the user interaction with and manipulation of the application program rendered on a GUI is achieved using the display device 140, or screen, which is presently a touch panel operationally coupled to the processor 112 controlling the displayed interface.

Processor 110 may control the rendering and/or the display of the GUI on the display device 140 depending on the type of application program, i.e. resident or web-based. Processor 110 may also handle the user entries according to the present method. The user entries to interact with an application program may be provided through interactions with the touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI of an AP or displace windows as explained here after. The input received from a user's touch is sent to the processor 110. The touch panel 140 is configured to detect and report the (location of the) touches to the processor 110, which can interpret the touches in accordance with the application program and the currently displayed GUI. For example, the processor 110 can initiate a task, e.g. a control of the AP or sent an activation message that the media content currently displayed is to be played on a second display device, subsequent to a given touch input.

The controller 113, e.g. a dedicated processor, may be provided to process input touches locally and reduce demand for the main processor 110 of the mobile device. The touch panel 140 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 140, other devices such as a stylus may be used in place of the user finger.

In the present system, a number of different applications may be provided with the mobile device 100, like AP2 132 and AP3 133. A swoop application 120 may be further provided to enable the present method.

The term swoop will be used here after to refer to the act and process of using an intuitive gesture on a first electronic device (e.g. mobile device, tablet ...) to send an asset or media content currently experienced on said electronic device (e.g. video, photo, music ...) to an end point like a second electronic device (e.g. Roku player, connected TV, other tablet, laptop computer ...). The term swoop back, or back swooping, will be used to here after to refer to the act and process of using a similar intuitive gesture on same first electronic device to retrieve one or more asset available on an end point.

The intuitive gesture will be described as a continuous touch input (i.e. a drag touch input) to transfer the displayed or experienced asset to another device. Thanks to the present method, the user can enjoy a fluid transfer back and forth by sliding or dragging the media content from a first electronic device (the swooper or swooping device) and dropping it onto an icon for a recipient end point, here after referred to as a swoopee (or swooped end point, like another electronic device or a social network friend). Using the reversed gesture on the first electronic device interface on the end point icon or the graphical indication that content is available thereon, the user will be able to transfer the content to the first electronic device. The transfer of the present system, in either direction, will be referred to as a swoop based transfer.

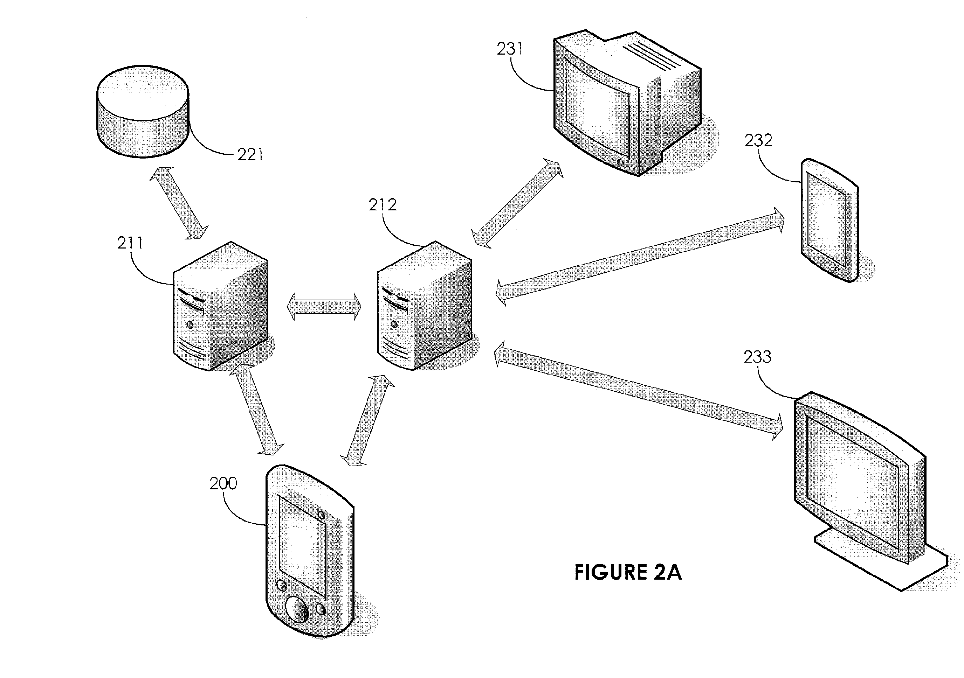

FIG. 2A is an illustration of a first embodiment of the present system with different operatively coupled devices. A mobile device 200 is configured for swooping a media content currently rendered or experienced on its touch interface. The content or asset may be browsed from a media content server 211 that distributes media content from one or more media content libraries or database 221. The browsing may be enabled in a web browser or through a web application like the swoop application 120 mentioned here before.

An interface like the one illustrated in FIG. 4A may allow the user to select different media contents from the media content database 211 available for viewing (if video content) or listening (if music). In the here after description, reference is made to media content streamed on mobile device 200 thanks to the media content server 211. The present teachings could be implemented as well for content held locally on the mobile device 200.

Thanks to the present system, a user may select an icon representation of a media content 405 with his finger 420 as shown in FIG. 4A. The selected content, once isolated as in FIG. 4B, is available for transfer to an end point, e.g. social network friends 401 and 402 or connected TV 403.

Referring back to FIG. 2A, a number of different display devices is available for playing the selected media content 405. In FIG. 2A, three different devices, respectively a computer screen 231, a tablet 232 and a TV screen 233 can be chosen by the user.

To that effect a queuing server 212, or swoop server, is provided in the present system to instruct the chosen display device to play the selected media content. Once a media content is selected for swooping to another display device, the swoop server 211 will receive from the mobile device 200 an activation message that the selected content is to be played on that display device.

One may note that the display devices are illustrated as hardware. This is in no way limiting as the asset may be swooped to any end point such as a software or player hosted on such electronic devices, or even a user of a social network, identified e.g. through his user name. For instance the media may be swooped to a Roku Player or a browser hosted on a personal computer. They may appear to the user as two different target displays even though hosted by the same electronic device. Additionally, the asset may be swooped to a friend on a social network, the friend's name appearing as a virtual representation on the GUI, provided the friend has accepted to become a swoopee for all assets a user may want to transfer to him.

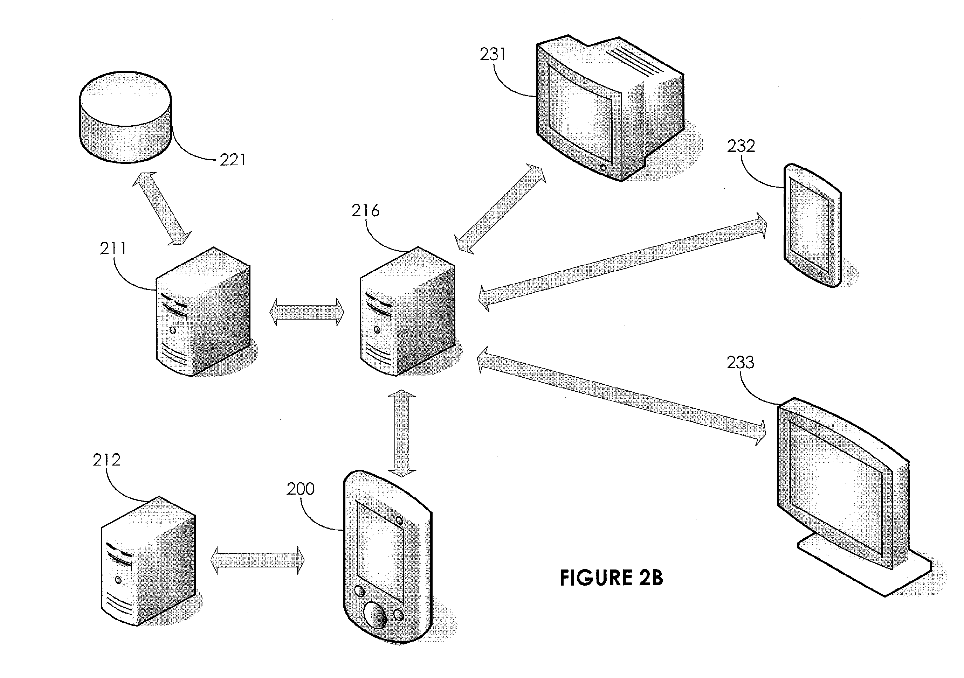

FIG. 2B is an illustration of a second embodiment of the present invention. The display devices 231 to 233 are provided, along with mobile device 200 and the media content server 211 and the one or more media content database 221. A home network is further provided through a home server 216. The different devices, including mobile device 200, may communicate with one another through a wireless protocol like a WIFI network enabled thanks to the home server 216. Mobile device 200 may also access the media content libraries 221 through the home server 216, or directly using a 3GPP connection. A swoop server 212 may also be provided for downloading the swoop application if not provided with the mobile device 200.

In the illustrative embodiments of FIGS. 2A and 2B, the mobile device 200 and the different display devices 231 to 233 are operatively coupled indirectly, either through the swoop server 212 or the home server 216.

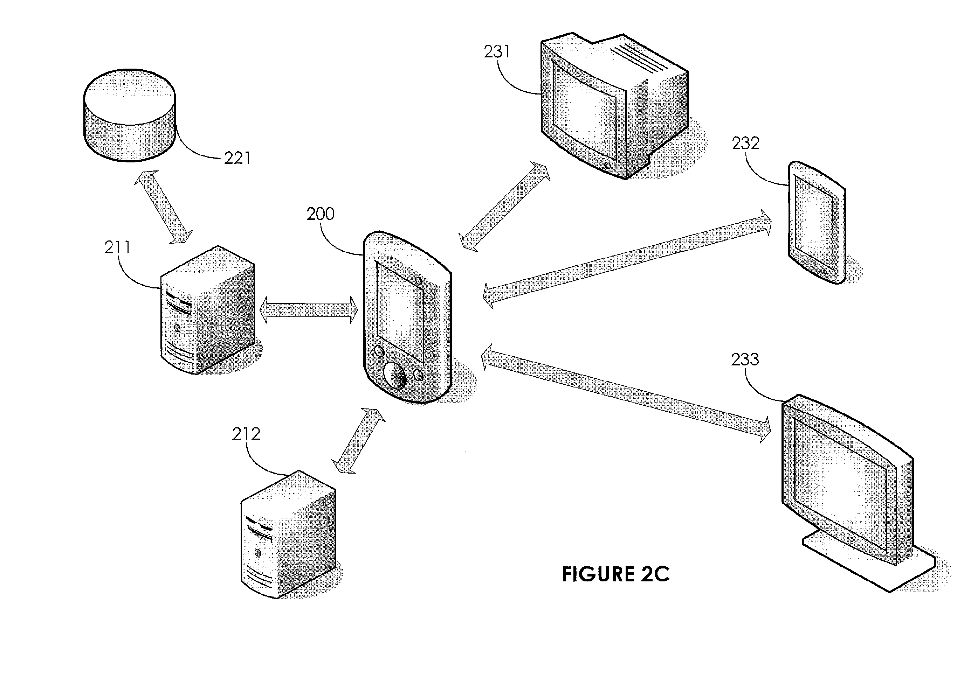

FIG. 2C is another illustration of a third embodiment of the present system. In this embodiment, mobile device 200 is paired directly, on a one on one basis, with each display device. A variety of communication bearers may be used for the direct coupling between the mobile device 200 and the display devices 321-323. Such communication bearers may include for instance NFC (near field communication) or Bluetooth. A swoop server 212 may be provided for downloading the swoop application if not provided with the mobile device 200.

Any combination of the exemplary embodiments of the present system may also be envisioned depending on how the mobile device 200 communicates
- directly or indirectly - with the plurality of end points. Regardless of the chosen communication path, the swoop or transfer application present on the mobile device, or the GUI when provided by a remote server, may be arranged to perform one or more of the following:
- receive information about, e.g. register or connect with, the different display devices, or more generally end points, so as to allow the user to choose one target end point that will render the selected media content (transfer to the end point), or from where media content may be retrieved (transfer from the end point). The transfer application may even receive update status information for a swoopee, the update status information comprising an availability indication, i.e. an active or inactive status, for rendering of any swooped asset, or information about media content available thereon for transfer to the mobile device as described ,
- connect with the media content server 211 and browse the one or more media content libraries 221 for remote content,
- display a list of media content or assets available for consumption by the user. Consumption will mean experiencing or rendering of the media content as mentioned before,
- enable selection of a media content in the list. The discovery of media content may be achieved e.g. through a search returning a hit list. This is one of many different discovery techniques as the user may simply select a media content as shown in a webpage referring to that media content,
- receive from the user touch inputs to request a transfer of a selected media content to one of the end points. This may be achieve for instance through a drag and drop of a graphical element, like an icon or a widget media player, rendering the selected media content onto an icon representation for the target end point. The drag and drop operation may be performed in a GUI as illustrated in FIGs. 4. The transfer, as illustrated here after, will allow the mobile device to detect/be aware that media content is available on the end point. Such a knowledge will cause the mobile device to add, i.e. render or associate, to the end point icon a graphical indication (reference number 410 in FIGs. 4) that the media content is available on said end point,
- more generally, discover media content available on the one or more end points known to the mobile device. Similarly, this discovery will allow the mobile device to render in association with the icon representation of an end point a graphical indication of the content available on said end point. This is illustrated for instance in FIG. 4G, described here after, showing numbers as the graphical indication, for instance 5 media items available on the end point (social network friend) represented with icon 401, while 1 is available for end point 402, and 3 for the connected TV represented with icon 403,
- detect and capture initiation of a drag input on either one of the icon representation or the graphical indication 410. This input from the user will signal the mobile device of the present system to retrieve the content available on the end point,
- send a transfer request, either to the end point or to the media content server (when the content is streamed) for transferring the content to the mobile device,
- render the transferred media content in a window or graphical element, like a player, that could optionally follow the further drag input from the user.

Different transfer methods may be used to make the media content available on the end point, and hence cause the addition of the graphical indication to the end point icon. It may be for instance the known transfer or sharing methods listed in the present background section, like Google Fling® or Apple Airplay®. Alternatively it may be a notification from the media content server 212 or the swoop server 211 of FIGs. 2 that report the content available.

More generally the transfer is optional as the present teachings may be readily available to any content available on distant end points, whether the content was first transferred thereon from the electronic device 200 or obtained from different sources.

Other functionalities of the transfer application will be described here after in relation to the other figures. The illustration of a swoop application is in no way limiting as the listed functionalities may be provided within an existing media player or a webbrowser through plugins, instead of a dedicated application. Other embodiments to implement the swoop or back swooping on an electronic device with a touch panel or pointing are readily available to the man skilled in the art.

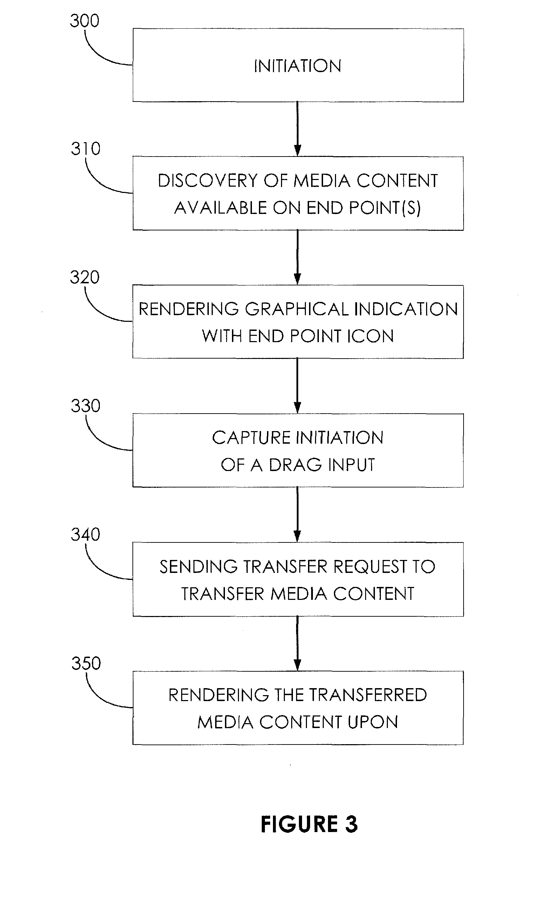

FIG. 3 is a flowchart illustrating another embodiment of the present method. Flowchart of FIG. 3 will be described in relation with examples of FIGs. 4 describing a swoop based transfer triggered by a full screen mode.

In an initiation act 300, the user may download the transfer application or a relevant plugin in order to enable his mobile device with any of the known transfer of content, or the present swoop based transfer, or more generally enable the mobile device with discovery of media content on remote end points. The download may be performed from the swoop server 212 of FIGs. 2A, 2B or 2C.

Alternatively, the functionalities of the present method may be native to the electronic device, either directly through its OS or as a preloaded application. The initiation act 300 may further comprise the registration of the targeted end points like the display devices or social network friends. The registration allow the association between a main device like mobile device 200 and end points like targeted display devices 231, 232 and 233 in FIGs. 2 or social network friends as illustraded with icons 401 and 402 in FIGs. 4. Registration or listing of the end points may comprise information such as name of the device, rank, status (enabled/disabled), device type (tablet, smartphone, laptop or desktop computer, IP TV, high definition TV ...), supported media formats (MPEG, AVI ...) and direct/indirect coupling (swoop server, communication bearers such as NFC, Bluetooth, WiFi, AirPlay ...) and address if needed.

The registration of an end point will enable the rendering of an icon representation for said end point in a GUI of the transfer application, as seen in FIGs. 4 with end point icons 401 and 402 (for social network friends) or icon 403 (illustrated for a connected TV).

When the swoop server 212 is used to connect the swooper and swoopee devices (exemplary embodiment of FIG. 2A), each targeted display device may be registered with the swoop server using a unique identifier (or a pointer to it) that is subsequently passed on the swooper device 200, using for instance the swoop application. Registration may be permitted using a user account the display device are associated with. A user may for instance enable the registration of remote devices.

Alternatively, registration may be performed either using the home server 216 (exemplary embodiment of FIG. 2B) or directly using NFC that allows swooper and swoopees to exchange identifiers, display device type, address in the network, supported media formats and other information.

In a further act 310, the electronic device 200 will discover, i.e. detect, media content available on one or more end points is associated with. Different discovery methods are readily available to the man skilled in the art and are beyond the scope of the present system. This may be for instance through a message received directly from one or more end points, like updates to the registration information exchanged between an end point and electronic device 200. The detection may be initiated by the media or swoop server, by an end point or at the request of the electronic device 200 itself. It maybe periodic for instance at regular intervals or depending upon content updates at the media server or the end points.

The discovery may also result from a transfer request whenever the user has selected content through his electronic device 200, and transferred it (through any of the known transfer techniques mentioned before, or the swoop based transfer) to an end point.

In a further act 320, based on the positive discovery of media content, a graphical indication that media content is available with the end point is added with the icon representation for said end point. This may be seen in the illustration of FIG. 4G wherein each icon representation for an end point is associated to a graphical indication shown as the number of media content available with said end point. This is enabled provided the discovery of medida content comprises disvering the number of media content available over an end point. Other graphical indication may be used, for instance a star used in the illustration of FIG. 4C and 4D.

FIGs 4A to 4C show an illustration of how media content may be available on and end point. Using the graphical user interface (GUI) of FIG. 4A showing a web application GUI with a media content player 405 available therein. The media player is selectable, for instance as illustrated in co-pending US patent application US13/434,384, and may be dragged and dropped onto any of end point icons 401 to 403. This will enable the transfer of the media content player in player 405 to the end point selected by the user, here social network friend 402.

Following the selection of the graphical element showing the media player in the GUI of FIG. 4A, the GUI will be updated so as to isolate the selected graphical element in a new GUI shown in FIG. 4B. This additional GUI, called swoop or transfer GUI, comprises icon representations for target end points registered with the electronic device 200.

The user then can drag graphical element 405 towards a selected icon, here icon 402 (see the arrow in FIG. 4B) so as to drop the graphical element onto icon 402. The drop will cause the electronic device 200 to initiate a transfer of the media content corresponding to the graphical element to the end point 402.

Thanks to the detection of this transfer, the electronic device 200 becomes aware that media content is available on the end point 402. Thus its processor will add the corresponding graphical representation 410 (for instance after confirmation of the transfer) as seen in the GUI of FIG. 4C. The Swoop transfer of FIGs. 4A and 4B is a mere illustration of one possible transfer as other known transfer (Google Fling® or Apple Airplay® for instance may be used to). Furthermore, the transfer may be server based if the content is streamed to the electronic device 200 or device to end point if the media content is local.

Whatever discovery method may be used, the graphical indication 410 may be placed in proximity to the icon 402 or on top of said icon so as to be visible to the user. Other graphical indications may be used, for instance having the icon of the end point (where content is available) blink or glow, or highlighting its contours. More generally any visual indication that this icon is rendered differently than other end point icons (where content is not available) may be used.

In a further act 320, the mobile device captures initiation of a drag input on either the icon representation 402 of the end point where content is available, or the graphical indication 410 itself. This is illustrated in FIG. 4D wherein the user's finger imparts a drag input onto the graphical indication 410. Such an input gesture is an indication that the user wants to transfer the media content available on the end point to his mobile device 200. This may be the case for instance if the content has been initially on his mobile device 200, and that he wants it back after a temporary transfer to an end point.

In a further act 330, once the initiation of a drag input is detected by the electronic device 200 processor, a transfer request or message is sent by the mobile device for transferring the media content (available there on) to the electronic device 200. Depending on the implementation of the present system, the transfer may be carried out by the swoop server of FIGs. 2A and 2B, that is the recipient of the transfer message issued by the electronic device 200. Alternatively, the end point may itself by the recipient of the transfer message when the content is local to the end point (case of the end point being another electronic device itself). Using the example of the end point as a social network friend, the recipient may be the social network server itself, or a counter part transfer application developed for the social network so as to enable the present transfer method.

Once the transfer of the media content is started and the mobile device 200 started receiving data for the media content, the media content may be rendered in a graphical element 406 as illustrated in FIG. 4E. In an additional embodiment of the present system, a media player corresponding to or associated with the transferred media content may be started and rendered in the graphical element 406.

In order to select the media player, in an additional embodiment of the present system, the media content transferred to the mobile device 200 may comprise an indication of a media type or required media player for its rendering. The processor of the electronic device 200 will then use that indication to start, i.e. trigger, the right media player.

Going back to the different known transfer methods from the electronic device to an end point (to make the media content available thereon), the indication for the media type or media player may be captured at the time of the transfer, along with the knowledge/awareness of that the media content is available on the end point recipient of the transfer. When the media content is transferred back, identifying the same content (transferred back) will allow the electronic device to retrieve the captured media type or media player for the subsequent rendering.

As seen in FIG. 4F, in an additional embodiment of the present method, the rendering of the media content may comprise displacing the graphical element 406 with each further drag input, so as to follow the user's input, here through his finger, through the GUI of FIG. 4F.

Going back to the illustrative GUI of FIG. 4G, the graphical indication that media content is available on an end point comprises the number of media content as mentioned before. This is enabled through the discovery that comprises numbering the media content available per associated end points. The transfer request of act 340 from the electronic device 200 to the end point (e.g. 402) may be for all discovered or available media conten. The transfer will be initiated for instance on a last in first out or last in last out basis, taking into account for instance when each media content was made available to the end point. In an additional embodiment of the present system, the received media content may be grouped in a playlist for successive rendering in the graphical element 406.

In an additional embodiment of the present system, as the rendering of the media content is carried on the electronic device 200, the graphical indication may be altered. It may be for instance removed if no more content is available, or decreased when it shows the number of media content available on the end point. Indeed, instead of a group transfer of all available media content from the end point to the mobile device 200, the transfer may be on a one per drag input basis, each time resulting in a decrease by one of the number of media content. Again the transfer may be on the end point side on a first in first out or first in last out basis or other queuing rules. The graphical indication then becomes an indication of the remaining number of media content not consumed yet by the user on his mobile device 200.

The known transfer solutions allow today fluid transfer of media content between connected devices either within the same home environment or within a network of authorized devices and social network friends. The transfer from the electronic device 200 to an end point may result in rendering the transferred media content on the end point (when the end point corresponds to another electronic device itself). For instance, a user may view different Youtube™ videos on a first mobile device and once he has selected one, transfer it to his connected TV which will carry on the rendering. He may then be interested in having the content back to his first mobile device.

When transferring the media content back to the user's first mobile device using the present method, it may be interesting to discontinue the rendering on the connected TV. To do so, in an additional embodiment of the present system, the mobile device will send a cancellation request, either to the media server, the swoop server or the end point itself (depending on the implementation), to cancel the rendering of the media content on the end point. The cancellation request may be sent either after detection of the drag input in act 330 of FIG. 3, after sending the transfer request of act 340, or for a more fluid rendering between devices, after the start of the rendering on the first mobile device in act 350.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for sharing a media content from on an end point with an electronic device, the electronic device comprising a first graphical user interface (GUI) of with at least one icon representation for the end point, the icon representation comprising a graphical indication that the media content is currently available on the end point, said electronic device comprising a processor controlling said first GUI, the method being carried out by said processor and comprising:
- capturing initiation of a drag input on either one of the icon representation or the graphical indication,
- sending a transfer request for transferring the media content to the electronic device,
- rendering the transferred media content in a graphical element.

2. A method according to claim 1, the rendering further cormpriing:
- displacing the graphical element with each further drag input.

3. A method according to claim 1, the rendering further comprising:
- starting a media player associated with the media content, the graphical element comprising the media player rendering the media content.

4. A method according the claim 3, wherein the transferred media content comprises an indication of media type or media player for the media content, the starting of the media content being based on said indication.

5. A method according to claim 3, the method comprising prior to the capturing:
- transferring the media content from the electronic device to the end point,
- storing an indication for media type or media player for the media content, the starting of the media player being based on said indication.

6. A method according to claim 1, the method comprising prior to the capturing:
- detecting that the media content is available on the end point,
- rendering a graphical indication that the media content is available in association with the icon representation of the end point upon the detecting.

7. A method according to claim 6, the detecting comprising receiving a message that the media content is available.

8. A method according to claim 6, the detecting comprising detecting a transfer of the media content from the electronic device to the end point.

9. A method according to claim 8, further comprising, after rendering of the media content:
- sending a cancellation request to cancel the rendering of the media content on the end point.

10. A method according to claim 6, wherein the detecting comprises detecting the number of media content available on the end point, the rendering of the graphical indication comprising rendering said number.

11. A method according to claim 10, the rendering of the transferred media content comprising grouping the detected number of media content in a playlist for successive rendering of said content.

12. A method according to claim 1, further comprising, after rendering of the media content:
- altering the graphical indication.

13. A electronic device for retrieving a media content available on an end point, the electronic device comprising a first graphical user interface (GUI) of with at least one icon representation for the end point, the icon representation comprising a graphical indication that the media content is currently available on the end point, said electronic device comprising a processor controlling said first GUI, the processor being arranged to:
- capture initiation of a drag input on either one of the icon representation or the graphical indication,
- send a transfer request for transferring the media content to the electronic device,
- rendering the transferred media content in a graphical element.

14. A program product stored on a non-transitory computer-readable storage medium, and executable by a computer in the form of a software agent including at least one software module setup to implement the method according to claims 1 to 12.
